# EUROPEAN PATENT APPLICATION

(11) **EP 4 561 164 A1**
(43) Date of publication of application: **28.05.2025**
(21) Application number: 23843237.1
(22) Date of filing: 10.07.2023
(51) Int. Cl.: H04W 28/20, H04W 24/10, H04W 84/12

(54) **METHOD AND APPARATUS FOR PERFORMING SOUNDING PROCEDURE IN WIRELESS LAN SYSTEM**

(30) Priority: 22.07.2022 KR 20220091200; 22.07.2022 KR 20220091217
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Frenkel, Matthias Alexander
(86) International application number: PCT/KR2023/009761
(87) International publication number: WO 2024/019386

(57) **Abstract**

Disclosed are a method and apparatus for performing a sounding procedure in a wireless LAN system. The method performed by a first station (STA) in a wireless LAN system, according to an embodiment of the present disclosure, may comprise the steps of: receiving a first null data PPDU (NDP) announcement frame and a second NDP announcement frame from a second STA; and transmitting, to the second STA, at least one feedback frame for at least one channel. Here, a bandwidth for the second STA may include a first channel and a second channel, the first NDP announcement frame may include a first STA Info field for the first channel, the second NDP announcement frame may include a second STA Info field for the second channel, and the at least one channel may be indicated on the basis of the first STA Info field and the second STA Info field.

## Description

### [TECHNICAL FIELD]

The present disclosure relates to a sounding procedure in a Wireless Local Area Network (WLAN) system, and more particularly, to a method and apparatus for a sounding procedure including transmitting and receiving a null data PPDU (NDP) announcement frame related to support of a wide bandwidth in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical object of the present disclosure is to provide a new null data PPDU (NDP) announcement frame transmission and reception method and apparatus in a wireless LAN system.

The additional technical object of the present disclosure is to provide a method and apparatus for a sounding procedure including NDP announcement frame transmission and reception related to support of a wide bandwidth in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving a first null data PPDU (NDP) announcement frame and a second NDP announcement frame from a second STA; and transmitting at least one feedback frame for at least one channel to the second STA. Herein, a bandwidth for the second STA may include a first channel and a second channel, the first NDP announcement frame may include a first STA Info field for the first channel, and the second NDP announcement frame includes a second STA Info field for the second channel, and the at least one channel may be indicated based on the first STA Info field and the second STA Info field.

A method performed by a second station (STA) in a wireless LAN system according to an additional aspect of the present disclosure may comprise: transmitting a first null data PPDU (NDP) announcement frame and a second NDP announcement frame to a first STA; and receiving at least one feedback frame for at least one channel from the first STA. Herein, a bandwidth for the second STA may include a first channel and a second channel, the first NDP announcement frame may include a first STA Info field for the first channel, and the second NDP announcement frame includes a second STA Info field for the second channel, and the at least one channel may be indicated based on the first STA Info field and the second STA Info field.

### [Technical Effects]

According to the present disclosure, a new null data PPDU (NDP) announcement frame transmission and reception method and apparatus in a wireless LAN system may be provided.

According to the present disclosure, a method and apparatus for a sounding procedure including NDP announcement frame transmission and reception related to support of a wide bandwidth in a wireless LAN system may be provided.

According to the present disclosure, throughput and efficiency may be improved by supporting a wide bandwidth in a sounding procedure in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of an NDP announcement frame to which the present disclosure may be applied.
FIG. 9 is a diagram for explaining the operation of a first STA in the sounding procedure according to the present disclosure.
FIG. 10 is a diagram for explaining the operation of a second STA in the sounding procedure according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

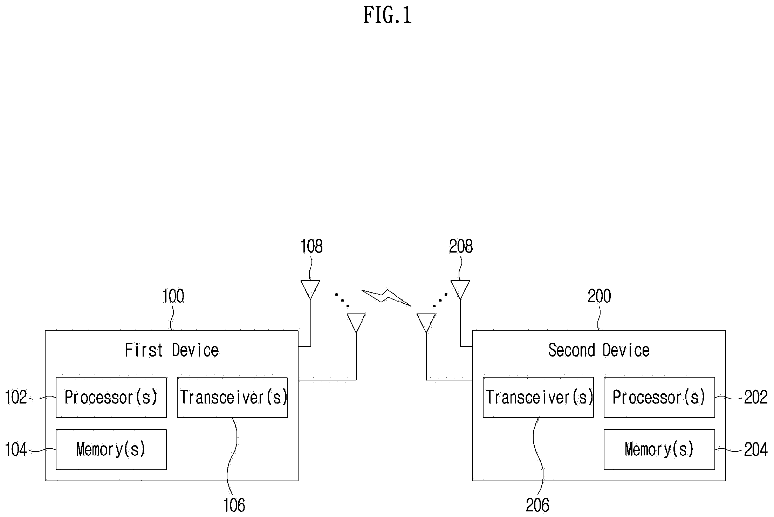

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

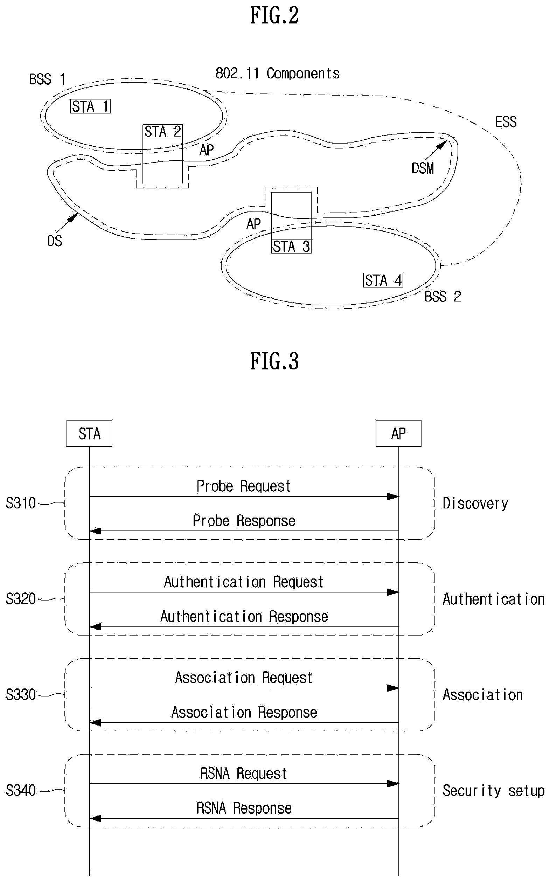

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

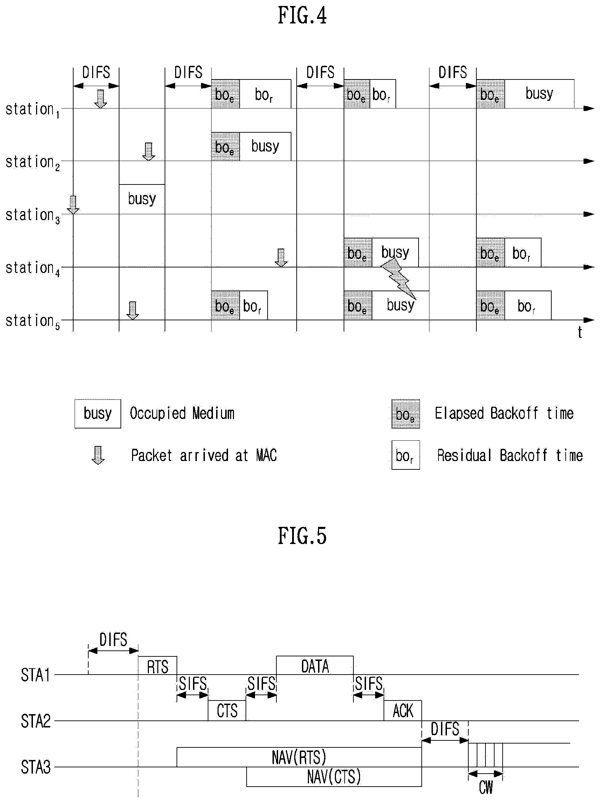

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NA V may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

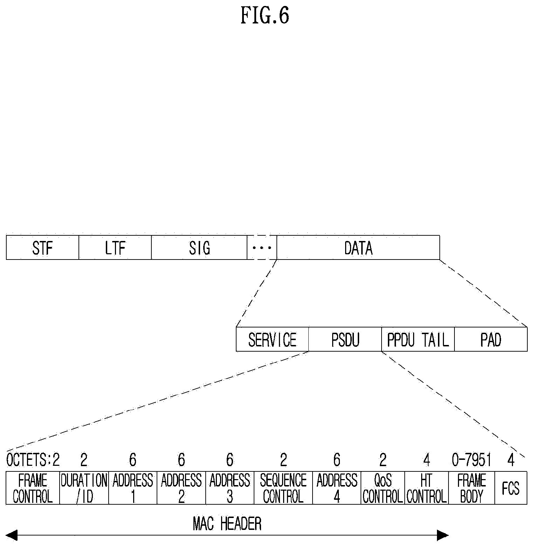

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

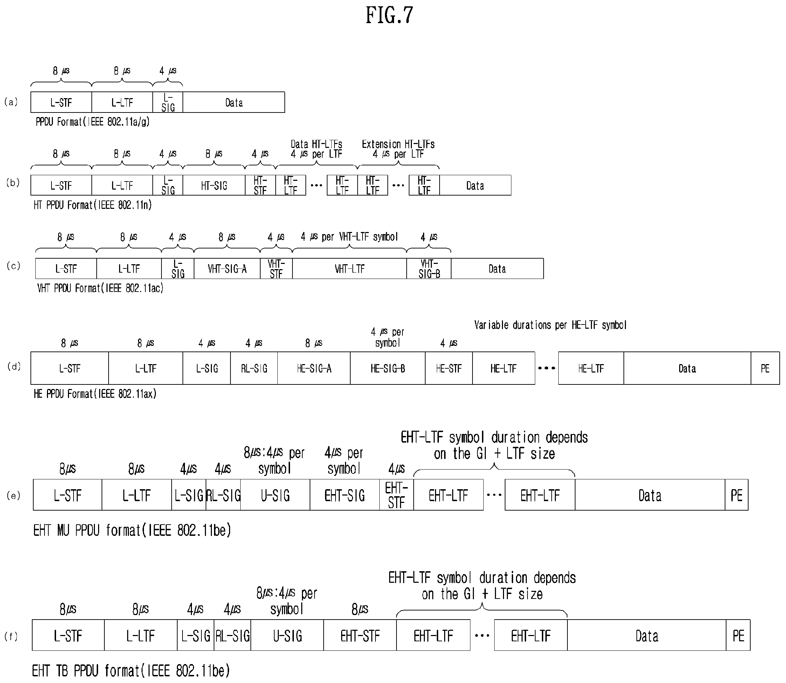

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### NDP announcement frame

In a wireless LAN system, a sounding procedure/protocol is used to determine channel state information. A beamformer STA requesting channel state information may transmit a training signal to beamformee STA(s). The beamformee STA may measure a channel using the training signal (e.g., sounding NDP) and feedback an estimate of a channel state to the beamformer STA. The beamformer STA may derive a steering matrix or a beamforming matrix using the feedback estimation.

The beamforming STA may feedback estimation of the channel state to the beamformer STA through a compressed beamforming/channel quality indication (CQI) report frame. Feedback information may include single user (SU) feedback, multi-user (MU) feedback, CQI feedback, and the like.

The beamformer STA may transmit an NDP announcement and NDP to the beamformee(s), and may receive feedback information from the beamformee STA(s). Additionally or alternatively, the beamformer STA may transmit the NDP announcement and the NDP to the beamformer(s), and may receive feedback information from the beamformer(s) by transmitting a beamforming report poll (BFRP) or a BFRP trigger to the beamformer(s).

An NDP Announcement (NDPA) frame may have multiple types/variants. For example, the NDP announcement frame may be configured in various formats such as a VHT NDP announcement frame, a HE NDP announcement frame, and an EHT NDP announcement frame, and the like. These formats may be distinguished by the NDP Announcement Variant subfield within the sounding dialog token field.

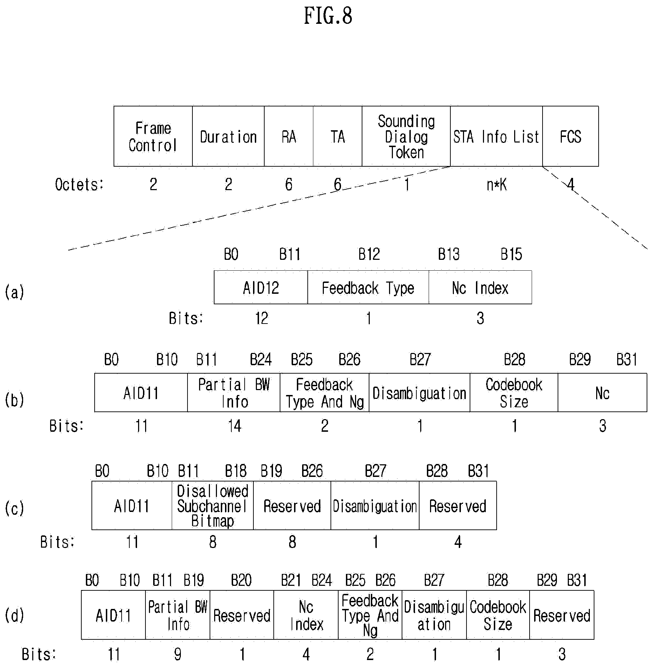

FIG.8 illustrates an exemplary format of an NDP announcement frame to which the present disclosure may be applied.

The NDP announcement frame may include one or more STA Info fields. When the NDP announcement frame includes only one STA Info field, a receiver address (RA) field may be set to an address of an STA capable of providing feedback. When the NDP announcement frame includes a plurality of STA Info fields, the RA field may be set to a broadcast address.

A transmitter address (TA) field may be set to an address of an STA transmitting an NDP announcement frame or may be set to a bandwidth signaling TA (bandwidth signaling TA) of an STA transmitting an NDP announcement frame. For example, in a non-HT or non-HT duplicate format, when the scrambling sequence (or scrambling sequence and service field) includes a parameter for channel bandwidth, the TA field may be set to bandwidth signaling TA.

The first two bits (B0 and B1) of the eight bits (B0-B7) of the sounding dialog token field may be used to indicate the type/variant of the NDP announcement frame. For example, for VHT or HE, the VHT NDP announcement frame may be indicated if B0 has a value of 0 and the value of B1 is 0, and the HE NDP announcement frame may be indicated if B0 has a value of 0 and the value of B1 is 1. For example, the EHT NDP notification frame may correspond to a case where both values of B0 and B1 are set to 1. If the value of B0 is 1 and the value of B1 is 0, this may correspond to a ranging NDP announcement frame.

In the case of VHT STA, since the first two bits (B0 and B1) of the sounding dialog token field are defined as reserved, the VHT STA may recognize the sounding dialog token number field of bits B2-B7 regardless of the values of B0 and B1.

For a VHT STA, the first two bits (B0 and B1) of the Sounding Dialog Token field are defined as reserved. Accordingly, the VHT STA may recognize the sounding dialog token number field of bits B2-B7 regardless of the values of B0 and B1.

For a HE STA, the first 1-bit (B0) of the Sounding Dialog Token field is defined as reserved, setting the value of the second bit (B1) to 0 is defined as indicating a VHT NDP announcement frame, and setting the value of the second bit (B1) to 1 is defined as indicating a HE NDP announcement frame. Accordingly, the HE STA may recognize the sounding dialog token number field of bits B2-B7 when the value of B1 is 1 regardless of the value of B0.

The sounding dialog token number subfield (bit positions B2-B7) may include a value for identifying an NDP announcement frame selected by the beamformer.

The NDP announcement frame may include n (n is an integer greater than or equal to 1) STA Info fields. One STA Info field may have a size of K octets, and may be K = 2 in a VHT NDP announcement frame and K = 4 in a HE NDP announcement frame or an EHT NDP announcement frame.

As in the example of FIG. 8(a), the STA Info field of the VHT NDP announcement frame may include AID12, feedback type, and Nc index subfields.

The AID12 subfield contains 12 least significant bits (LSBs) among the AIDs of STAs expected to process subsequent NDP(s) and prepare for sounding feedback.

The feedback type subfield indicates the type of feedback requested, and corresponds to SU when the value is 0 and MU when the value is 1.

The Nc index subfield indicates a value obtained by subtracting 1 from the number of columns (i.e., Nc) in the compressed beamforming feedback matrix (i.e., Nc-1) when the feedback type is MU. In case of SU, the Nc index field is reserved.

The example of FIG. 8(b) illustrates the format of the STA Info field of the HE NDP announcement frame when the value of the AID11 field is not a specific value (e.g., 2047).

A value of the AID11 subfield other than the specific value (e.g., 2047) includes 11 LSBs among AIDs of STAs expected to process subsequent NDP(s) and prepare for sounding feedback.

The partial BW Info subfield may contain 7-bit RU start index (B0-B6) and 7-bit RU end index (B7-B13). The RU index may be determined according to the bandwidth of the NDP announcement frame, and its unit may be 26-tone RU. For example, to indicate the 26-tone RU index X, the value of the RU start/end index subfield may be set to X-1.

The feedback type and Ng (feedback type and Ng) subfield may indicate whether SU/MU/CQI feedback is requested for trigger based (TB) sounding, Ng= 4 or 16, and quantization resolution in combination with the codebook size subfield. For non-TB sounding, the feedback type and Ng subfield and codebook size subfield may indicate SU or CQI.

Setting disambiguation subfield to 1 may prevent a non-HE STA (e.g., VHT STA) from wrongly identifying the corresponding field as an AID field.

The Nc subfield is set to a value of Nc-1. When the feedback type is SU or MU, Nc corresponds to the number of columns in the compressed beamforming feedback matrix, and when the feedback type is CQI, Nc may correspond to the number of space-time streams (STS). In the case of an NDP announcement frame having an AID11 subfield value other than 2047 and individually addressed for a single STA, the Nc subfield may be reserved.

The example of FIG. 8(c) illustrates the format of the STA Info field of the HE NDP announcement frame when the value of the AID11 field is a specific value (e.g., 2047).

The disallowed subchannel bitmap subfield indicates the 20 MHz subchannels and the 242-tone RUs that are present in sounding NDPs announced by the NDP Announcement frame and the 242-tone RUs that are to be included in requested sounding feedback. The lowest numbered bit of the disallowed Subchannel bitmap corresponds to a 20MHz subchannel that lies at the lowest frequency among all 20MHz subchannels within the BSS bandwidth. Each successive bit in the bitmap corresponds to the next higher 20 MHz subchannel. A bit in the bitmap is set to 1 may indicate that no energy is present in the sounding NDP associated with this NDP Announcement frame. For each disallowed 20 MHz subchannel, the 242-tone RU that is most closely aligned in frequency with the 20 MHz subchannel may be disallowed for PPDUs that use a specific tone plan. STAs addressed by the NDP Announcement frame do not include tones from disallowed 242-tone RUs when determining the average SNR of STS 1 to Nc and when generating requested sounding feedback. If a 20 MHz subchannel and its corresponding 242-tone RU is allowed, the corresponding bit in the bitmap is set to 0.

The example of FIG. 8(d) illustrates the format of the STA Info field of the EHT NDP announcement frame.

The AID11 subfield may be defined as shown in Table 1. Basically, the AID11 subfield includes the identifier of the STA expected to process the subsequent NDP and prepare for sounding feedback.

**[Table 1]**

| AID Subfield value | Description | NDP Announcement frame variant applicability |
|---|---|---|
| 0 | - STA Info field is addressed to the associated AP or mesh AP or IBSS STA | Applicable for all variant |
| 1-2007 | - STA Info field is addressed to an associated STA whose AID is equal to the value in the AID11 subfield if the NDP Announcement frame is not a Ranging variant. | Applicable for all variant |
| | - STA Info field is addressed to an unassociated STA or an associated STA whose RSID/AID is equal to the value in the RSID11/AID11 subfield if the NDP Announcement frame is a Ranging variant | |
| | - 2007 value is reserved for EHT variant. | |
| 2008-2042 | reserved | Not applicable for all variant |
| 2043 | - STA Info field contains a Sequence Authentication Code subfield if the NDP Announcement frame is a Ranging variant. - Otherwise, AID11 value is reserved. | Applicable only for Ranging variant |
| 2044 | - STA Info field contains a partial timing synchronization function (TSF) if the NDP Announcement frame is a Ranging variant. - Otherwise, AID11 value is reserved. | Applicable only for Ranging variant |
| 2045 | - STA Info field contains ranging measurement parameters if the NDP Announcement frame is a Ranging variant. - Otherwise, AID11 value is reserved. | Applicable only for Ranging variant |
| 2046 | reserved | Not applicable for all variant |
| 2047 | - STA Info field contains a Disallowed Subchannel Bitmap if the NDP Announcement frame is a HE variant. - Otherwise, AID11 value is reserved. | Applicable only for HE variant |

The partial BW Info subfield may include a 1-bit (B0) resolution subfield and an 8-bit (B1-B8) feedback bitmap. The resolution subfield indicates the resolution bandwidth (e.g., 20 MHz or 40 MHz) for each bit of the feedback bitmap subfield. The feedback bitmap subfield may indicate a request for each resolution bandwidth from a low frequency to a high frequency, and the first bit (B 1) of the bitmap corresponds to the lowest resolution bandwidth. Each bit of the feedback bitmap is set to 1 when feedback for the corresponding resolution bandwidth is requested.

If the bandwidth of the EHT NDP announcement frame is less than 320 MHz, a resolution of 20 MHz may be indicated by setting the value of the resolution bit (B0) to 0.

When the bandwidth of the EHT NDP announcement frame is 20 MHz, B1 is set to 1 to indicate that feedback for the 242-tone RU is requested, and B2-B8 may be reserved and set to 0.

When the bandwidth of the EHT NDP announcement frame is 40 MHz, B1 and B2 indicate that feedback is requested in each of the two 242-tone RUs from low to high frequencies, and B3-B8 may be reserved and set to 0.

When the bandwidth of the PPDU carrying the EHT NDP announcement frame is 80 MHz, B0 may be set to 0 to indicate a resolution of 20 MHz. If all of B1-B4 are set to 1, it may indicate that feedback for a 996-tone RU is requested. Otherwise, B1-B4 may indicate that feedback in each of the four 242-tone RUs from low to high frequencies is requested, and B5-B8 may be reserved and set to 0.

When the bandwidth of the PPDU carrying the EHT NDP announcement frame is 160 MHz, B0 may be set to 0 to indicate a resolution of 20 MHz. If all B1-B4 are set to 1, it may indicate that feedback for the lower 996-tone RU is requested, otherwise B1-B4 may indicate that feedback is requested in each of four 242-tone RUs from a low frequency to a high frequency in the lower 80 MHz. If all B5-B8 are set to 1, it may indicate that feedback for the upper 996-tone RU is requested, otherwise B5-B8 may indicate that feedback is requested in each of four 242-tone RUs from low to high frequencies in the upper 80 MHz.

When the bandwidth of the PPDU carrying the EHT NDP announcement frame is 320 MHz, B0 may be set to 1 to indicate a resolution of 40 MHz. When both B1 and B2 are set to 1, it may indicate that feedback for the first 996-tone RU is requested, otherwise, B1 and B2 may indicate that feedback is requested in each of the two 484-tone RUs from a low frequency to a high frequency in the first 80 MHz. When both B3 and B4 are set to 1, it may indicate that feedback for the second 996-tone RU is requested, otherwise, B3 and B4 may indicate that feedback is requested in each of the two 484-tone RUs from the low frequency to the high frequency in the second 80 MHz. When both B5 and B6 are set to 1, it may indicate that feedback for the third 996-tone RU is requested, otherwise, B5 and B6 may indicate that feedback is requested in each of the two 484-tone RUs from the low frequency to the high frequency in the third 80 MHz. When both B7 and B8 are set to 1, it may indicate that feedback for the fourth 996-tone RU is requested, otherwise, B7 and B8 may indicate that feedback is requested in each of the two 484-tone RUs from the low frequency to the high frequency in the fourth 80 MHz. The feedback tone set for each 484-tone RU may consist of two 242-tone RU overlapping feedback tone sets with the 484-tone RU.

The partial BW subfield may have the same value as in the example of Table 2 according to a related configuration.

**[Table 2]**

| Feedback RU/MRU size | Bandwidth of the EHT NDP Announcement frame (MHz) | Partial BW Info subfield values in binary format (B0 B1 B2 B3 B4 B5 B6 B7 B8) | Operating channel width of the EHT beamformee (MHz) |
|---|---|---|---|
| 242 | 20 | 010000000 | 20, 40, 80, 160, 320 |
| | 40 | 010000000, 001000000 | |
| | 80 | 010000000, 001000000, 000100000, 000010000 | 20, 80, 160, 320 |
| | 160 | 010000000, 001000000, 000100000, 000010000, 000001000, 000000100, 000000010, 000000001 | |
| 484 | 40 | 011000000 | 40, 80, 160, 320 |
| | 80 | 011000000, 000110000 | 80, 160, 320 |
| | 160 | 011000000, 000110000, 000001100, 000000011 | |
| | 320 | 110000000, 101000000, 100100000, 100010000, 100001000, 100000100, 100000010, 100000001 | |
| 484+242 | 80 | 011100000, 011010000, 010110000, 001110000 | |
| | 160 | 011100000, 011010000, 010110000, 001110000, 000001110, 000001101, 000001011,000000111 | |
| 996 | 80 | 011110000 | |
| | 160 | 011110000, 000001111 | |
| | 320 | 111000000, 100110000, 100001100, 100000011 | |
| 996+484 | 160 | 011111100, 011110011, 011001111, 000111111 | 160, 320 |
| | 320 | 111100000,1110100000, 110110000, 101110000, 100001110, 100001101, 100001011, 100000111 | |
| 996+484+242 | 160 | 011101111, 011011111, 010111111,001111111, 011111110,011111101, 011111011, 011110111 | |
| 2x996 | 160 | 011111111 | |
| | 320 | 111110000, 100001111 | |
| 2x996+484 | 320 | 111111000, 111110100, 111101100, 111011100, 110111100, 101111100, 100111110, 100111101, 100111011, 100110111, 100101111, 100011111 | 320 |
| 3x996 | 320 | 111111100, 111110011, 111001111, 100111111 | |
| 3x996+484 | 320 | 111111110, 111111101, 111111011, 111110111, 111101111, 111011111, 110111111, 101111111 | |
| 4x996 | 320 | 111111111 | |

For TB sounding, the feedback type and Ng subfield and the codebook size subfields may be set according to the example shown in Table 3.

**[Table 3]**

| Feedback Type And Ng | | Codeboo k Size | Description |
|---|---|---|---|
| B25 | B26 | B28 | |
| 0 | 0 | 0 | SU, *Ng*=4, quantization resolution (φ,ψ)={4, 2} |
| 0 | 0 | 1 | SU, *Ng*=4, quantization resolution (φ,ψ)={6, 4} |
| 0 | 1 | 0 | SU, *Ng*=16, quantization resolution (φ,ψ)={4, 2} |
| 0 | 1 | 1 | SU, *Ng*=16, quantization resolution (φ,ψ)={6, 4} |
| 1 | 0 | 0 | MU, *Ng*=4, quantization resolution (φ,ψ)={7, 5} |
| 1 | 0 | 1 | MU, *Ng*=4, quantization resolution (φ,ψ)={9, 7} |
| 1 | 1 | 0 | CQI |
| 1 | 1 | 1 | MU, *Ng*=16, quantization resolution (φ,ψ)={9, 7} |

For non-TB sounding, the feedback type and Ng subfield and the codebook size subfields may be set according to the example shown in Table 4.

**[Table 4]**

| Feedback Type And Ng | | Codebook Size | Description |
|---|---|---|---|
| B25 | B26 | B28 | |
| 0 | Reserved | Reserved | SU |
| 1 | 1 | 0 | CQI |

Setting disambiguation subfield to 1 may prevent a non-EHT STA (e.g., VHT STA) from wrongly identifying the corresponding field as an AID field.

In the EHT NDP announcement frame, RA is set to a broadcast address, and the following may be applied. If the feedback type and Ng subfield and the codebook size subfield indicate SU or MU, Nc index subfield is set to a value of Nc-1, Nc corresponds to the number of columns in the compressed beamforming feedback matrix, and values greater than 7 are reserved in the Nc index subfield. If the feedback type and Ng subfield and the codebook size subfield indicate CQI, Nc index subfield is set to a value of Nc-1, Nc corresponds to the number of space-time streams (STS), and values greater than 7 are reserved in the Nc index subfield. One or more STA Info fields may exist.

In an EHT NDP announcement frame having a single STA Info field, the RA field may be set to an individual address, and the Nc index subfield may be reserved.

### NDP Announcement frame transmission and reception considering a wide bandwidth

In the wireless LAN system described above, channels for a maximum bandwidth of 320 MHz are defined.

In contrast, in next-generation wireless LAN systems, wide bandwidths (e.g., 480 MHz bandwidth, 640 MHz bandwidth, etc.) may be considered to improve throughput, efficiency, etc.

Additionally, the NDP announcement frame as described above may be used to obtain channel information for beamforming. Here, within the NDP announcement frame, a partial bandwidth information (partial BW Info) subfield may be defined to request/indicate feedback for only some channels.

The present disclosure proposes a method for designing a partial BW Info subfield in a situation where wideband transmission (i.e., transmission over a wide bandwidth) is considered.

In next-generation wireless LAN systems (e.g., Next Wifi, next 802.11 be, UHR, etc.), a new NDP announcement frame (e.g., UHR NDP announcement frame) may be defined by extending the existing NDP announcement frame (e.g., EHT NDP announcement frame). Alternatively, a new NDP announcement frame may be defined separately from the existing NDP announcement frame.

As described above, the NDP announcement frame may have a STA Info field, and a partial BW Info subfield may be defined within the STA Info field to request/indicate feedback on state information of only some channels.

In the next generation wireless LAN system, a wide bandwidth (e.g., 480 MHz bandwidth, 640 MHz bandwidth, etc.) may be considered to improve throughput and efficiency. In this disclosure, a method for designing a partial BW Info subfield considering transmission in a wide bandwidth is proposed through various examples.

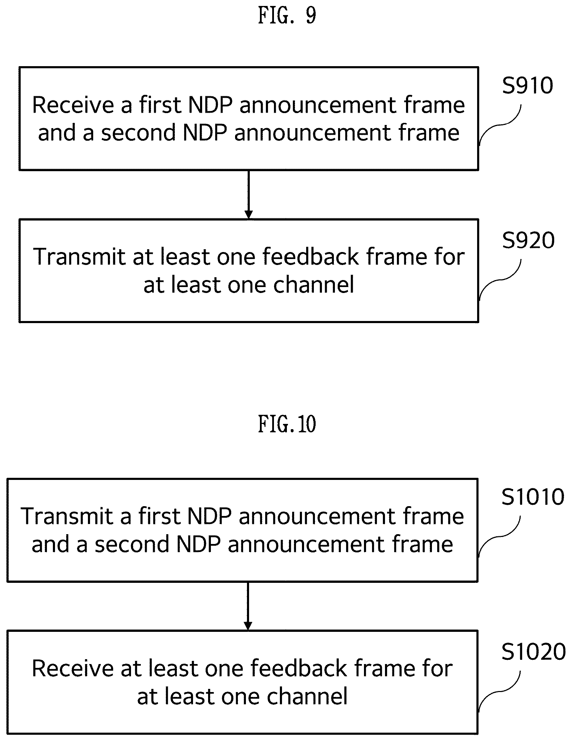

FIG. 9 is a diagram for explaining the operation of a first STA in the sounding procedure according to the present disclosure.

In step S910, the first STA may receive a first NDP announcement frame and a second NDP announcement frame from the second STA.

Here, the first STA may correspond to a non-AP STA, and the second STA may correspond to an AP STA.

In this regard, the bandwidth for the second STA may include a first channel and a second channel. At this time, the first NDP announcement frame may include a first STA Info field for the first channel, and the second NDP announcement frame may include a second STA Info field for the second channel. Here, the first STA Info field and the second STA Info field correspond to a plurality of STA Info fields addressed to the first STA.

In step S920, the first STA may transmit at least one feedback frame for at least one channel to the second STA.

Here, at least one channel associated with the feedback frame may be indicated based on the first STA Info field and the second STA Info field.

For example, at least one channel in step S920 may be indicated by a first partial BW Info subfield included in a first STA Info field and a second partial BW Info subfield included in a second STA Info field. Here, each of the first partial BW Info subfield and the second partial BW Info subfield may consist of of 8 bits indicating a feedback bitmap and 1 bit indicating a resolution of the corresponding feedback bitmap.

For example, when the bandwidth for the second STA is 480 MHz, the first channel may be a primary (i.e., a relatively low frequency range) 320 MHz channel, and the second channel may be a secondary (i.e., a relatively high frequency range) 160 MHz channel within 320 MHz. Alternatively, when the bandwidth for the second STA is 480 MHz, the first channel may be a secondary 320 MHz channel, and the second channel may be a 160 MHz channel within the primary 320 MHz.

At this time, if the 1 bit related to resolution included in the first partial BW Info subfield and the second partial BW Info subfield indicates 40 MHz, the 8 bits related to the feedback bitmap included in the first partial BW Info subfield may be mapped to eight 40 MHz channels within the first channel. In this case, among the 8 bits related to the feedback bitmap included in the second partial BW Info subfield, half (e.g., B1 to B4) may be mapped to four 40 MHz channels within the second channel, and the remaining half (e.g., B5 to B9) may be defined as reserved.

Alternatively, the 1-bit related to resolution included in the first partial BW Info subfield may indicate 40 MHz, and the 1-bit related to resolution included in the second partial BW Info subfield may indicate 20 MHz. In this case, the 8-bit related to feedback bitmap included in the first partial BW Info subfield may be mapped to eight 40 MHz channels within the first channel, and the 8-bit related to feedback bitmap included in the second partial BW Info subfield may be mapped to eight 20 MHz channels within the second channel.

For another example, if the bandwidth for the second STA is 640 MHz, the first channel may be a primary 320 MHz channel and the second channel may be a secondary 320 MHz channel.

At this time, the 1-bit related to resolution included in the first partial BW Info subfield and the second partial BW Info subfield may be defined to indicate 40 MHz. In this case, the 8-bit related to feedback bitmap included in the first partial BW Info subfield may be mapped to eight 40 MHz channels in the first channel, and the 8-bit related to feedback bitmap included in the second partial BW Info subfield may be mapped to eight 40 MHz channels in the second channel.

Additionally or alternatively, when the bandwidth for the second STA is 480 MHz, the first channel may be a 320 MHz channel and the second channel may be 160 MHz. For example, the 320 MHz channel may be a primary 320 MHz channel and the 160 MHz channel may be a 160 MHz channel within a secondary 320 MHz channel. For another example, the 320 MHz channel may be a secondary 320 MHz channel and the 160 MHz channel may be 160 MHz within the primary 320 MHz channel.

In this case, the first NDP announcement frame in step S910 may further include a third STA Info field for the first channel. Here, the third STA Info field may be related to an indication of at least one channel in step S920.

In this regard, at least one channel in step S920 may be indicated by a first partial BW Info subfield included in a first STA Info field, a second partial BW Info subfield included in a second STA Info field, and a third partial BW Info subfield included in a third STA Info field. Here, each of the first partial BW Info subfield, the second partial BW Info subfield, and the third partial BW Info subfield consists of 8 bits indicating a feedback bitmap, and a resolution of the feedback bitmap may be fixed to a specific channel width.

For example, the first partial BW Info subfield may indicate whether 20 MHz unit channel feedback is provided in the first 160 MHz channel within the first channel, the second partial BW Info subfield may indicate whether 20 MHz unit channel feedback is provided in the second channel, and the third partial BW Info subfield may indicate whether 20 MHz unit channel feedback is provided in the second 160 MHz channel within the first channel.

Additionally or alternatively, when the bandwidth for the second STA is 640 MHz, the first channel may be a first 320 MHz channel within the bandwidth, and the second channel may be a second 320 MHz channel within the bandwidth.

In this case, the first NDP announcement frame in step S910 may further include a third STA Info field for the first channel, and the second NDP announcement frame may further include a fourth STA Info field for the second channel. Here, the third STA Info field and the fourth STA Info field may be related to an indication of at least one channel in step S920.

In this regard, at least one channel in step S920 may be indicated by a first partial BW Info subfield included in a first STA Info field, a second partial BW Info subfield included in a second STA Info field, a third partial BW Info subfield included in a third STA Info field, and a fourth partial BW Info subfield included in a fourth STA Info field. Here, each of the first partial BW Info subfield, the second partial BW Info subfield, the third partial BW Info subfield, and the fourth partial BW Info subfield consists of 8 bits indicating a feedback bitmap, and a resolution of the feedback bitmap may be fixed to a specific channel width.

For example, the first partial BW Info subfield may indicate whether there is 20MHz unit channel feedback in the first 160MHz channel within the first channel, the second partial BW Info subfield may indicate whether there is 20MHz unit channel feedback in the first 160MHz channel within the second channel, the third partial BW Info subfield may indicate whether there is 20MHz unit channel feedback in the second 160MHz channel within the first channel, and the fourth partial BW Info subfield may indicate whether there is 20MHz unit channel feedback in the second 160MHz channel within the second channel.

The method performed by the first STA described in the example of FIG. 9 may be performed by the first device (100) of FIG. 1. For example, one or more processors (102) of the first device (100) of FIG. 1 may be configured to receive a first NDP announcement frame and a second NDP announcement frame from the STA (200) through one or more transceivers (106), and transmit at least one feedback frame for at least one channel to the STA (200).

For example, one or more processors (102) of the first device (100) may decode one or more STA Info fields included in the received first NDP announcement frame and one or more STA Info fields included in the second NDP announcement frame. At this time, one or more processors (102) of the first device (100) may decode the bandwidth subfield and the partial bandwidth subfield included in each STA Info field to identify at least one channel to which it shall feedback state information. As a specific example, one or more processors (102) of the first device (100) may use feedback bitmap-related information included in the partial bandwidth subfield and resolution-related information of the corresponding feedback bitmap to identify at least one channel to which it shall feedback state information. For at least one channel identified in this manner, one or more processors (102) of the first device (100) may configure at least one feedback frame by calculating/obtaining state information.

Furthermore, one or more memories (104) of the first device (100) may store commands for performing the method described in the example of FIG. 9 or the examples described below when executed by one or more processors (102).

FIG. 10 is a drawing for explaining the operation of a second STA in the sounding procedure according to the present disclosure.

In step S1010, the second STA may transmit the first NDP announcement frame and the second NDP announcement frame to the first STA.

Here, the first STA may correspond to a non-AP STA, and the second STA may correspond to an AP STA.

In this regard, the bandwidth for the second STA may include a first channel and a second channel. At this time, the first NDP announcement frame may include a first STA Info field for the first channel, and the second NDP announcement frame may include a second STA Info field for the second channel. Here, the first STA Info field and the second STA Info field correspond to a plurality of STA Info fields addressed to the first STA.

In step S1020, the second STA may receive at least one feedback frame for at least one channel from the first STA.

Here, at least one channel associated with the feedback frame may be indicated based on the first STA Info field and the second STA Info field.

In the example of Fig. 10, the specific details according to the bandwidth size, the specific details regarding the bit configuration of the STA Info field and the partial BW Info subfield, etc. are the same as those described in the example of Fig. 9, so redundant description is omitted.

The method performed by the second STA described in the example of FIG. 10 may be performed by the second device (200) of FIG. 1. For example, one or more processors (202) of the second device (200) of FIG. 1 may be configured to transmit a first NDP announcement frame and a second NDP announcement frame to the STA (100) through one or more transceivers (206), and receive at least one feedback frame for at least one channel from the STA (100).

For example, one or more processors (202) of the second device (200) may encode one or more STA Info fields delivered through the first NDP announcement frame and one or more STA Info fields delivered through the second NDP announcement frame. At this time, one or more processors (202) of the second device (100) may encode a partial bandwidth subfield for indicating at least one channel to be fed back, and may encode the STA Info field based on the partial bandwidth subfield. As a specific example, one or more processors (202) of the second device (200) may use feedback bitmap-related information constituting the partial bandwidth subfield and resolution-related information of the corresponding feedback bitmap to indicate at least one channel to which state information shall be fed back to the addressed STA (100). One or more processors (202) of the second device (200) may receive and decode a feedback frame for at least one channel indicated in this manner, and confirm state information for the at least one channel.

Furthermore, one or more memories (204) of the second device (200) may store commands for performing the method described in the example of FIG. 10 or the examples described below when executed by one or more processors (202).

The NDP announcement frame described in the examples of FIGS. 9 and 10 may have an extended/modified NDP announcement frame format that includes one or more additional, modified, or excluded fields compared to the NDP announcement frame format of FIG. 8.

The examples of FIGS. 9 and 10 may correspond to some of the various examples of the present disclosure. Hereinafter, various examples of the present disclosure, including the examples of FIGS. 9 and 10, will be described.

### Embodiment 1

This embodiment is for a method of defining a partial BW Info subfield composed of 10 bits of B0 to B9, where B0 and B1 indicate bitmap resolution, and a bitmap composed of B2 to B9 indicates a feedback request of a channel.

In the corresponding partial BW Info subfield format, B0 and B1 may be named as resolution subfields, and B2 to B9 may be named as feedback bitmap subfields.

In this regard, it may be defined to indicate 20MHz, 40MHz, 80MHz, 160MHz (or reserved) depending on the values of B0 and B1. For example, a value of 0 (i.e., B0B1=00) may indicate 20MHz, a value of 1 (i.e., BOB1=01) may indicate 40MHz, a value of 2 (i.e., BOB1=10) may indicate 80MHz, and a value of 3 (i.e., BOB1=11) may indicate 160MHz or reserved.

Additionally, B2 to B9 correspond to bitmaps and may be defined to indicate whether feedback of each channel is requested in order from the lowest frequency in units of channels determined by the resolution of B0 and B1. For example, a value of 0 of each bit can indicate that feedback of the corresponding channel is not requested, and a value of 1 may indicate that feedback of the corresponding channel is requested, and the opposite case is not excluded.

Considering the bit configuration as described above, the partial BW Info subfield may be specifically defined as follows according to each bandwidth of the NDP announcement frame.

An X MHz channel indication based on at least one bit of a bitmap described in the present disclosure may mean an indication of whether to provide feedback for a channel of resolution X MHz based on each bit value.

First, a case of 20MHz bandwidth is described.

For example, if B0 and B1 are set to 0, 20MHz channel indication may performed using only B2, and B3 to B9 may be defined as reserved.

It may be undefined if B0 and B1 are set to 1, 2, or 3, and may only be defined if B0 and B1 are set to 0.

Next, a case of 40MHz bandwidth is described.

For example, if B0 and B1 are set to 0, each 20MHz channel indication may be performed using only B2 and B3, and may be mapped to B2 and B3 in order from the lower 20MHz channel. B4 to B9 may be defined as reserved.

If B0 and B1 are set to the value 1, 40MHz channel indication may be performed using only B2, and B3 to B9 may be defined as reserved.

It may be undefined if B0 and B1 are set to values 2 or 3.

Additionally, B0 and B1 may be defined to be set to only one (i.e., 0 or 1). For example, it may be desirable for B0 and B1 to be set to the value 0.

Next, a case of 80MHz bandwidth is described.

For example, if B0 and B1 are set to 0, each 20MHz channel indication may be performed using only B2 to B5, and may be mapped to B2 to B5 in order from the lower 20MHz channel. B6 to B9 may be defined as reserved.

If B0 and B1 are set to the value 1, each 40MHz channel indication may be performed using only B2 and B3, and may be mapped to B2 and B3 in order from the lower 40MHz channel. B4 to B9 may be defined as reserved.

If B0 and B1 are set to values of 2, 80MHz channel indication may be performed using only B2, and B3 to B9 may be defined as reserved.

It may be undefined if B0 and B1 are set to the value 3.

Additionally, B0 and B1 may be defined to be set to only one (i.e., 0, 1 or 2). As an example, it may be desirable for B0 and B1 to be set to the value 0.

Next, a case of 160MHz bandwidth is described.

For example, if B0 and B1 are set to values of 0, each 20MHz channel indication may be performed using B2 to B9, and may be mapped to B2 to B9 in order from the lowest 20MHz channel.

If B0 and B1 are set to the value 1, each 40MHz channel indication may be performed using only B2 to B5, and may be mapped to B2 to B5 in order from the lower 40MHz channel. B6 to B9 may be defined as reserved.

If B0 and B1 are set to values of 2, each 80MHz channel indication may be performed using only B2 and B3, and may be mapped to B2 and B3 in order from the lower 80MHz channel. B4 to B9 may be defined as reserved.

If B0 and B1 are set to 3 and the value 3 indicates 160MHz, the 160MHz channel indication may be performed using only B2, and B3 to B9 may be defined as reserved. If B0 and B1 are set to 3 and the value 3 indicates that it is reserved, it may not be defined/used.

Additionally, B0 and B1 may be defined to be set to only one (i.e., 0, 1 or 2). For example, it may be desirable for B0 and B1 to be set to the value 0.

Next, a case of 320MHz bandwidth is described.

For example, if B0 and B1 are set to the value 1, each 40MHz channel indication may be performed using B2 to B9, and may be mapped to B2 to B9 in order from the lower 40MHz channel.

If B0 and B1 are set to values of 2, each 80MHz channel indication may be performed using only B2 to B5, and may be mapped to B2 to B5 in order from the lower 80MHz channel. B6 to B9 may be defined as reserved.

If B0 and B1 are set to the value 3 and the value 3 indicates 160MHz, each 160MHz channel indication may be performed using only B2 and B3, and may be mapped to B2 and B3 in order from the lower 160MHz channel. B4 to B9 may be defined as reserved. If B0 and B1 are set to the value 3 and the value 3 indicates that it is reserved, it may not be defined/used.

It may be undefined if B0 and B1 are set to 0 values.

Additionally, B0 and B1 may be defined to be set to only one (i.e., 1, 2 or 3). As an example, it may be desirable for B0 and B1 to be set to the value 1.

Next, a case of 480MHz bandwidth is described.

For example, if B0 and B1 are set to values of 2, each 80MHz channel indication may be performed using only B2 to B7, and may be mapped to B2 to B7 in order from the lower 80MHz channel. B8 and B9 may be defined as reserved.

If B0 and B1 are set to the value 3 and the value 3 indicates 160MHz, each 160MHz channel indication may be performed using only B2 to B4, and may be mapped to B2 to B4 in order from the lower 160MHz channel. B5 to B9 may be defined as reserved. If B0 and B1 are set to the value 3 and the value 3 indicates that it is reserved, it may not be defined/used.

It may be undefined if B0 and B1 are set to the value 0 or 1.

Additionally, B0 and B1 may be defined to be set to only one (i.e., 2 or 3). For example, it may be desirable for B0 and B1 to be set to the value 2.

Next, a case of 640MHz bandwidth is described.

For example, if B0 and B1 are set to values of 2, each 80MHz channel indication may be performed using B2 to B9, and may be mapped to B2 to B9 in order from the lowest 80MHz channel.

If B0 and B1 are set to the value 3 and the value 3 indicates 160MHz, each 160MHz channel indication may be performed using only B2 to B5, and may be mapped to B2 to B5 in order from the lower 160MHz channel. B6 to B9 may be defined as reserved. If B0 and B1 are set to the value 3 and the value 3 indicates that it is reserved, it may not be defined/used.

It may be undefined if B0 and B1 are set to the value 0 or 1.

Additionally, B0 and B1 may be defined to be set to only one (i.e., 2 or 3). For example, it may be desirable for B0 and B1 to be set to the value 2.

In the case where the method proposed in this embodiment is limited to only one resolution per bandwidth, the partial BW Info subfield may consists of only 8 bits indicating the bitmap, excluding 2 bits indicating the resolution (i.e., B0 and B1). In this case, a receiver receiving an NDP announcement frame may determine/verify the bitmap resolution using the bandwidth information of the NDP announcement frame.

### Embodiment 2

This embodiment utilizes a previously defined partial BW Info subfield (e.g., the EHT partial BW Info subfield of FIG. 8(d)), and is a method that takes into account a situation in which different NDP announcement frames are transmitted for each primary 320 MHz (hereinafter referred to as P320) and each secondary 320 MHz (hereinafter referred to as S320) in a wide bandwidth (e.g., 480 MHz bandwidth, 640 MHz bandwidth, etc.).

In this regard, the method in the present embodiment may be preferable when the maximum allowable bandwidth of an AP STA transmitting an NDP announcement frame is 640 MHz and the maximum allowable bandwidth of a non-AP STA receiving an NDP announcement frame is considered to be 320 MHz.

Specifically, the method in the present embodiment is a method for defining a partial BW Info subfield to be composed of 9 bits of B0 to B8, where B0 indicates a bitmap resolution, and a bitmap composed of B1 to B8 indicates a feedback request of a channel.

In the corresponding partial BW Info subfield format, B0 may be named as a resolution subfield, and B2 to B8 may be named as feedback bitmap subfields.

In this regard, it may be defined to indicate 20MHz or 40MHz depending on the value of B0. For example, 0 value may indicate 20MHz, and 1 value may indicate 40MHz.

Additionally, B1 to B8 correspond to bitmaps and may be defined to indicate whether feedback is requested for each channel in order from the lowest frequency in units of channels determined by the resolution of B0. For example, for each bit, 0 value may indicate that feedback for the corresponding channel is not requested, and 1 value may indicate that feedback for the corresponding channel is requested, and the opposite case is not excluded.

Considering the bit configuration as described above, the partial BW Info subfield may be specifically defined as follows according to each bandwidth of the NDP announcement frame.

An X MHz channel indication based on at least one bit of a bitmap described in the present disclosure may mean an indication of whether to provide feedback for a channel of resolution X MHz based on each bit value.

First, a case of 20MHz bandwidth is described.

For example, if B0 is set to a value of 0, 20MHz channel indication may be performed using only B1, and B2 to B8 may be defined as reserved.

It is undefined if B0 is set to the value 1, and may be defined only if B0 is set to the value 0.

Next, a case of 40MHz bandwidth is described.

For example, if B0 is set to a value of 0, each 20MHz channel indication may be performed using only B1 and B2, and may be mapped to B1 and B2 in order from the lower 20MHz channel. B3 to B8 may be defined as reserved.

If B0 is set to a value of 1, 40MHz channel indication may be performed using only B1, and B2 to B8 may be defined as reserved.

In this regard, B0 may be defined to be set to only one (i.e., 0 or 1). For example, it may be desirable for B0 to be set to the value 0.

Next, a case of 80MHz bandwidth is described.

For example, if B0 is set to a value of 0, each 20MHz channel indication may be performed using only B1 to B4, and may be mapped to B1 to B4 in order from the lower 20MHz channel. B5 to B8 may be defined as reserved.

If B0 is set to a value of 1, each 40MHz channel indication may be performed using only B1 and B2, and may be mapped to B1 and B2 in order from the lower 40MHz channel. B3 to B8 may be defined as reserved.

In this regard, B0 may be defined to be set to only one (i.e., 0 or 1). For example, it may be desirable for B0 to be set to the value 0.

Next, a case of 160MHz bandwidth is described.

For example, if B0 is set to a value of 0, each 20MHz channel indication may be performed using B1 to B8, and may be mapped to B1 to B8 in order from the lower 20MHz channel.

If B0 is set to a value of 1, each 40MHz channel indication may be performed using only B1 to B4, and may be mapped to B1 to B4 in order from the lower 40MHz channel. B5 to B8 may be defined as reserved.

In this regard, B0 may be defined to be set to only one (i.e., 0 or 1). For example, it may be desirable for B0 to be set to the value 0.

Next, a case of 320MHz bandwidth is described.

For example, if B0 is set to a value of 1, each 40MHz channel indication may be performed using B1 to B8, and may be mapped to B1 to B8 in order from the lowest 40MHz channel.

It may be undefined if B0 is set to the value 0.

Next, a case of 480MHz bandwidth is described.

For example, if B0 is set to a value of 0, it may not be used in a channel in which 320 MHz of P320 or 320 MHz of S320 is used, and may only be used in a channel in which only 160 MHz of P320 or only 160 MHz of S320 is used. In this case, each 20 MHz channel indication may be performed using B1 to B8, and may be mapped to B1 to B8 in order from the lowest 20 MHz channel.

If B0 is set to a value of 1, within a channel in which 320 MHz is used among P320 or 320 MHz is used among S320, each 40 MHz channel indication may be performed using B1 to B8, and may be mapped to B1 to B8 in order from a lower 40 MHz channel. Within a channel in which only 160 MHz is used among P320 or 160 MHz is used among S320, each 40 MHz channel indication may be performed using only B1 to B4, and may be mapped to B1 to B4 in order from a lower 40 MHz channel. At this time, B5 to B8 may be defined as reserved.

In this regard, it may be defined only if B0 is set to the value 1.

Next, a case of 640MHz bandwidth is described.

For example, if B0 is set to a value of 1, each 40MHz channel indication may be performed using B1 to B8 in each P320 and S320, and may be mapped to B1 to B8 in order from the lowest 40MHz channel.

In this regard, it may not be defined if B0 is set to the value 0, but may be defined only if B0 is set to the value 1.

In the case where the method proposed in this embodiment is restricted to only one resolution per bandwidth, the partial BW Info subfield may be composed of only 8 bits indicating a bitmap, excluding one bit (i.e., B0) indicating the resolution. In this case, a receiver receiving an NDP announcement frame may determine/verify the bitmap resolution using the bandwidth information of the NDP announcement frame.

In the following disclosure, a method for designing a partial BW Info subfield is specifically proposed by considering a situation in which multiple STA Info fields may be allocated to one STA.

As an example, the method described below may be preferably applied in a bandwidth of 320 MHz or more.

When multiple STA Info fields are allocated to one STA, the AID11 subfield of the STA Info fields allocated to the corresponding STA may be set identically to the AID of the corresponding STA. On the other hand, the partial BW Info subfields in the corresponding multiple STA Info fields may be set differently. In this regard, the other subfields may be set to a specific value only in the first STA Info field, and may be set identically, set to reserved, or used for other purposes in the remaining STA Info fields.

The partial BW Info subfield in the embodiments described below (i.e., embodiments 3 and 4) may be composed of 9 bits of B0 to B8, where B0 indicates a bitmap resolution, and a bitmap composed of B1 to B8 may be defined to indicate a feedback request of a channel.

Here, B0 may be named as a resolution subfield, and B2 to B8 may be named as feedback bitmap subfields. In this regard, it may be defined to indicate 20MHz or 40MHz depending on the value of B0. For example, a value of 0 may indicate 20MHz, and a value of 1 may indicate 40MHz.

Additionally, B1 to B8 correspond to bitmaps and may be defined to indicate whether feedback is requested for each channel in order from the lowest frequency in units of channels determined by the resolution of B0. For example, for each bit, 0 value may indicate that feedback for the corresponding channel is not requested, and 1 value may indicate that feedback for the corresponding channel is requested, and the opposite case is not excluded.

Based on the bit configuration of the partial bandwidth subfield described above, a method of defining a partial BW Info subfield according to each bandwidth of an NDP announcement frame is proposed through specific examples as follows.

### Embodiment 3

The present embodiment relates to a method for designing a partial BW Info subfield for feedback channel indication, considering a case where one or more STA Info fields addressed to one STA are allocated.

An X MHz channel indication based on at least one bit of a bitmap described in the present disclosure may mean an indication of whether to provide feedback for a channel of resolution X MHz based on each bit value.

First, a case of 20MHz bandwidth is described.

For example, if B0 is set to a value of 0, 20MHz channel indication may be performed using only B1, and B2 to B8 may be defined as reserved.

It may not be defined if B0 is set to the value 1, and may only be defined if B0 is set to the value 0.

Next, a case of 40MHz bandwidth is described.

For example, if B0 is set to a value of 0, each 20MHz channel indication may be performed using only B1 and B2, and may be mapped to B1 and B2 in order from the lower 20MHz channel. B3 to B8 may be defined as reserved.

If B0 is set to a value of 1, 40MHz channel indication may be performed using only B1, and B2 to B8 may be defined as reserved.

In this regard, B0 may be defined to be set to only one (i.e., 0 or 1). For example, it may be desirable for B0 to be set to the value 0.

Next, a case of 80MHz bandwidth is described.

For example, if B0 is set to a value of 0, each 20MHz channel indication may be performed using only B1 to B4, and may be mapped to B1 to B4 in order from the lower 20MHz channel. B5 to B8 may be defined as reserved.

If B0 is set to a value of 1, each 40MHz channel indication may be performed using only B1 and B2, and may be mapped to B1 and B2 in order from the lower 40MHz channel. B3 to B8 may be defined as reserved.

In this regard, B0 may be defined to be set to only one (i.e., 0 or 1). For example, it may be desirable for B0 to be set to the value 0.

Next, a case of 160MHz bandwidth is described.

For example, if B0 is set to a value of 0, each 20MHz channel indication may be performed using B1 to B8, and may be mapped to B1 to B8 in order from the lowest 20MHz channel.

If B0 is set to a value of 1, each 40MHz channel indication may be performed using only B1 to B4, and may be mapped to B1 to B4 in order from the lower 40MHz channel. B5 to B8 may be defined as reserved.

In this regard, B0 may be defined to be set to only one (i.e., 0 or 1). For example, it may be desirable for B0 to be set to the value 0.

Next, a case of 320MHz bandwidth is described.

For example, if B0 is set to a value of 0, two STA Info fields, i.e., a first STA Info field and a second STA Info field addressed to the non-AP STA, may be used.

At this time, the partial BW Info subfield in the first STA Info field may correspond to P160 (or 160MHz in a relatively low frequency region). For the first STA Info field, each 20MHz channel indication may be performed using B1 to B8, and may be mapped to B1 to B8 in order from the lower 20MHz channel.

Additionally, the partial BW Info subfield in the second STA Info field may correspond to S160 (or 160 MHz in a relatively high frequency region). For the second STA Info field, each 20 MHz channel indication may be performed using B1 to B8, and may be mapped to B1 to B8 in order from the lower 20 MHz channel.

If B0 is set to a value of 1, each 40MHz channel indication may be performed using B1 to B8, and may be mapped to B1 to B8 in order from the lowest 40MHz channel.

In this regard, B0 may be defined to be set to only one (i.e., 0 or 1). For example, it may be desirable for B0 to be set to the value 1.

Next, a case of 480MHz bandwidth is described.

As the 480 MHz bandwidth described in this embodiment, a structure of P160 + S320 and/or a structure of one 160 MHz within P320 + S320 may be considered. Additionally or alternatively, for clarity of explanation, the 480 MHz bandwidth described in this embodiment may be considered as a structure of P160 + S160 + T160.

For example, if B0 is set to a value of 0, three STA Info fields, i.e., a first STA Info field, a second STA Info field, and a third STA Info field addressed to the non-AP STA, may be used.

At this time, the partial BW Info subfield in the first STA Info field may correspond to P160 (or 160 MHz of the relatively lowest frequency region). For the first STA Info field, each 20 MHz channel indication may be performed using B1 to B8, and may be mapped to B1 to B8 in order from the lowest 20 MHz channel.

The partial BW Info subfield in the second STA Info field may correspond to S160 (or 160 MHz of the second relatively lower frequency range). For the second STA Info field, each 20 MHz channel indication may be performed using B1 to B8, and may be mapped to B1 to B8 in order from the lower 20 MHz channel.

The partial BW Info subfield in the third STA Info field may correspond to T160 (or 160 MHz of the relatively highest frequency range). For the third STA Info field, each 20 MHz channel indication may be performed using B1 to B8, and may be mapped to B1 to B8 in order from the lower 20 MHz channel.

If B0 is set to a value of 1, two STA Info fields, i.e., a first STA Info field and a second STA Info field addressed to the non-AP STA, may be used.

At this time, the partial BW Info subfield in the first STA Info field may correspond to P320 (in case of one 160MHz structure in P320 + S320) or S320 (in case of P160 + S320 structure). For the first STA Info field, each 40MHz channel indication may be performed using B1 to B8, and may be mapped to B1 to B8 in order from the lower 40MHz channel.

The partial BW Info subfield in the second STA Info field may correspond to 160 MHz in S320 (in case of one 160 MHz structure in P320 + S320) or P160 (in case of P160 + S320 structure). For the second STA Info field, each 40 MHz channel indication may be performed using B1 to B4, and may be mapped to B1 to B4 in order from the lower 40 MHz channel. B5 to B8 may be defined as reserved.

Alternatively, the partial BW Info subfield in the first STA Info field may correspond to 160 MHz in S320 (in case of one 160 MHz structure in P320 + S320) or P160 (in case of P160 + S320 structure). For the first STA Info field, each 40 MHz channel indication may be performed using B1 to B4, and may be mapped to B1 to B4 in order from a lower 40 MHz channel. B5 to B8 may be defined as reserved.

The partial BW Info subfield in the second STA Info field may correspond to P320 (in case of one 160MHz structure in P320 + S320) or S320 (in case of P160 + S320 structure). For the second STA Info field, each 40MHz channel indication may be performed using B1 to B8, and may be mapped to B1 to B8 in order from the lower 40MHz channel.

In this regard, B0 may be defined to be set to only one (i.e., 0 or 1). For example, it may be desirable for B0 to be set to the value 1.

Next, a case of 640MHz bandwidth is described.

As the 640 MHz bandwidth described in the present disclosure, a structure of two 160 MHz channels (i.e., P160, S160) within P320 + two 160 MHz channels within S320 may be considered.

For example, if B0 is set to a value of 0, four STA Info fields, i.e., a first STA Info field, a second STA Info field, a third STA Info field, and a fourth STA Info field addressed to the non-AP STA, may be used.

At this time, the partial BW Info subfield in the first STA Info field may correspond to P160 (or 160 MHz of the relatively lowest frequency region). For the first STA Info field, each 20 MHz channel indication may be performed using B1 to B8, and may be mapped to B1 to B8 in order from the lowest 20 MHz channel.

The partial BW Info subfield in the second STA Info field may correspond to S160 (or 160 MHz of the second relatively lower frequency range). For the second STA Info field, each 20 MHz channel indication may be performed using B1 to B8, and may be mapped to B1 to B8 in order from the lower 20 MHz channel.

The partial BW Info subfield in the third STA Info field may correspond to the lower 160 MHz in S320 (or 160 MHz corresponding to the position of P160 in S320, 160 MHz of the third relatively low frequency region). For the third STA Info field, each 20 MHz channel indication may be performed using B1 to B8, and may be mapped to B1 to B8 in order from the lower 20 MHz channel.

The partial BW Info subfield in the 4th STA Info field may correspond to a high 160 MHz in S320 (or 160 MHz corresponding to the position of S160 in S320, 160 MHz of a relatively highest frequency range). For the 4th STA Info field, each 20 MHz channel indication may be performed using B1 to B8, and may be mapped to B1 to B8 in order from a low 20 MHz channel.

If B0 is set to a value of 1, two STA Info fields, i.e., a first STA Info field and a second STA Info field addressed to the non-AP STA, may be used.

At this time, the partial BW Info subfield in the first STA Info field may correspond to P320 (or 320 MHz in a relatively low frequency region). For the first STA Info field, each 40 MHz channel indication may be performed using B1 to B8, and may be mapped to B1 to B8 in order from the lower 40 MHz channel.

The partial BW Info subfield in the second STA Info field may correspond to S320 (or 320 MHz in a relatively high frequency range). For the second STA Info field, each 40 MHz channel indication may be performed using B1 to B8, and may be mapped to B1 to B8 in order from the lower 40 MHz channel.

In this regard, B0 may be defined to be set to only one (i.e., 0 or 1). For example, it may be desirable for B0 to be set to the value 1.

In the case where the method proposed in this embodiment is restricted to only one resolution per bandwidth, the partial BW Info subfield may be composed of only 8 bits indicating a bitmap, excluding one bit (i.e., B0) indicating the resolution. In this case, a receiver receiving an NDP announcement frame may determine/verify the bitmap resolution using the bandwidth information of the NDP announcement frame.

### Embodiment 4

This embodiment is for a method that takes into account a situation where different NDP announcement frames are transmitted for each primary 320MHz (hereinafter referred to as P320) and each secondary 320MHz (hereinafter referred to as S320) in a wide bandwidth (e.g., 480MHz bandwidth, 640MHz bandwidth, etc.).

In this regard, the method in the present embodiment may be preferable when the maximum allowable bandwidth of an AP STA transmitting an NDP announcement frame is 640 MHz and the maximum allowable bandwidth of a non-AP STA receiving an NDP announcement frame is considered to be 320 MHz.

Specifically, the present embodiment relates to a method for designing a partial BW Info subfield for feedback channel indication by considering a case where one or more STA Info fields addressed to one STA are allocated.

An X MHz channel indication based on at least one bit of a bitmap described in the present disclosure may mean an indication of whether to provide feedback for a channel of resolution X MHz based on each bit value.

First, a case of 20MHz bandwidth is described.

For example, if B0 is set to a value of 0, 20MHz channel indication may be performed using only B1, and B2 to B8 may be defined as reserved.

It may not be defined when B0 is set to the value 1, and can only be defined when B0 is set to the value 0.

Next, a case of 40MHz bandwidth is described.

For example, if B0 is set to a value of 0, each 20MHz channel indication may be performed using only B1 and B2, and may be mapped to B1 and B2 in order from the lower 20MHz channel. B3 to B8 may be defined as reserved.

If B0 is set to a value of 1, 40MHz channel indication may be performed using only B1, and B2 to B8 may be defined as reserved.

In this regard, B0 may be defined to be set to only one (i.e., 0 or 1). For example, it may be desirable for B0 to be set to the value 0.

Next, a case of 80MHz bandwidth is described.

For example, if B0 is set to a value of 0, each 20MHz channel indication may be performed using only B1 to B4, and may be mapped to B1 to B4 in order from the lower 20MHz channel. B5 to B8 may be defined as reserved.

If B0 is set to a value of 1, each 40MHz channel indication may be performed using only B1 and B2, and may be mapped to B1 and B2 in order from the lower 40MHz channel. B3 to B8 may be defined as reserved.

In this regard, B0 may be defined to be set to only one (i.e., 0 or 1). For example, it may be desirable for B0 to be set to the value 0.

Next, a case of 160MHz bandwidth is described.

For example, if B0 is set to a value of 0, each 20MHz channel indication may be performed using B1 to B8, and may be mapped to B1 to B8 in order from the lowest 20MHz channel.

If B0 is set to a value of 1, each 40MHz channel indication may be performed using only B1 to B4, and may be mapped to B1 to B4 in order from the lower 40MHz channel. B5 to B8 may be defined as reserved.

In this regard, B0 may be defined to be set to only one (i.e., 0 or 1). For example, it may be desirable for B0 to be set to the value 0.

Next, a case of 320MHz bandwidth is described.

For example, if B0 is set to a value of 0, two STA Info fields, i.e., a first STA Info field and a second STA Info field addressed to the non-AP STA, may be used.

At this time, the partial BW Info subfield in the first STA Info field may correspond to P 160 (or 160 MHz in a relatively low frequency region). For the first STA Info field, each 20 MHz channel indication may be performed using B1 to B8, and may be mapped to B1 to B8 in order from the lower 20 MHz channel.

Additionally, the partial BW Info subfield in the second STA Info field may correspond to S160 (or 160 MHz in a relatively high frequency region). For the second STA Info field, each 20 MHz channel indication may be performed using B1 to B8, and may be mapped to B1 to B8 in order from the lower 20 MHz channel.

If B0 is set to a value of 1, each 40MHz channel indication may be performed using B1 to B8, and may be mapped to B1 to B8 in order from the lowest 40MHz channel.

In this regard, B0 may be defined to be set to only one (i.e., 0 or 1). For example, it may be desirable for B0 to be set to the value 1.

Next, a case of 480MHz bandwidth is described.

As the 480 MHz bandwidth described in this embodiment, a structure of P160 + S320 and/or a structure of one 160 MHz within P320 + S320 may be considered.

For example, if B0 is set to a value of 0, two STA Info fields, i.e., a first STA Info field and a second STA Info field addressed to the non-AP STA, may be used within a channel in which the entire 320 MHz among P320 or the entire 320 MHz among S320 are used.

In case of one 160MHz structure within P320 + S320, the partial BW Info subfield within the first STA Info field may correspond to P160 (or 160MHz of a relatively low frequency region). For the first STA Info field, each 20MHz channel indication may be performed using B1 to B8, and may be mapped to B1 to B8 in order from the lower 20MHz channel.

The partial BW Info subfield in the second STA Info field may correspond to S160 (or 160MHz in a relatively high frequency region). For the second STA Info field, each 20MHz channel indication may be performed using B1 to B8, and may be mapped to B1 to B8 in order from the lower 20MHz channel.

On the other hand, in case of the structure of P160 + S320, the partial BW Info subfield in the first STA Info field may correspond to 160 MHz (or 160 MHz in a relatively low frequency region) corresponding to P160 among S320. For the first STA Info field, each 20 MHz channel indication may be performed using B1 to B8, and may be mapped to B1 to B8 in order from the lower 20 MHz channel.

The partial BW Info subfield in the second STA Info field may correspond to 160 MHz (or 160 MHz in a relatively high frequency range) corresponding to S160 among S320. For the second STA Info field, each 20 MHz channel indication may be performed using B1 to B8, and may be mapped to B1 to B8 in order from the lower 20 MHz channel.

Additionally, in a channel where only 160 MHz among P320 or 160 MHz among S320 is used, one STA Info field, i.e., a third STA Info field addressed to the non-AP STA, may be used.

For the partial BW Info subfield in the third STA Info field, each 20MHz channel indication may be performed using B1 to B8, and may be mapped to B1 to B8 in order from the lowest 20MHz channel.

If B0 is set to the value 1, one STA Info field may be used in each of P320 and S320.

For example, in a channel where 320 MHz in full or 320 MHz in full is used among P320 or S320, the first STA Info field addressed to the corresponding non-AP STA may be used. For the partial BW Info subfield in the first STA Info field, each 40 MHz channel indication may be performed using B1 to B8, and may be mapped to B1 to B8 in order from the lowest 40 MHz channel.

Additionally, in a channel where 160 MHz among P320 or 160 MHz among S320 is used, a second STA Info field addressed to the corresponding non-AP STA may be used. For the partial BW Info subfield in the second STA Info field, each 40 MHz channel indication may be performed using B1 to B4, and may be mapped to B1 to B4 in order from a lower 40 MHz channel. B5 to B8 may be defined as reserved.

In this regard, it may be defined only if B0 is set to the value 1.

Next, a case of 640MHz bandwidth is described.

As the 640 MHz bandwidth described in the present disclosure, a structure of two 160 MHz channels (i.e., P160, S160) within P320 + two 160 MHz channels within S320 may be considered.

If B0 is set to a value of 0, two STA Info fields may be used in each of P320 and S320.

For example, for P320, two STA Info fields may be used, namely, a first STA Info field and a second STA Info field addressed to the corresponding non-AP STA.

At this time, the partial BW Info subfield in the first STA Info field may correspond to P160 (or 160 MHz in a relatively low frequency region). For the first STA Info field, each 20 MHz channel indication may be performed using B1 to B8, and may be mapped to B1 to B8 in order from the lower 20 MHz channel.

The partial BW Info subfield in the second STA Info field may correspond to S160 (or 160MHz in a relatively high frequency region). For the second STA Info field, each 20MHz channel indication may be performed using B1 to B8, and may be mapped to B1 to B8 in order from the lower 20MHz channel.

Additionally, for S320, two STA Info fields may be used, namely, a third STA Info field and a fourth STA Info field addressed to the non-AP STA.

At this time, the partial BW Info subfield in the third STA Info field may correspond to 160 MHz (or 160 MHz in a relatively low frequency region) corresponding to the position of P160 in S320. For the third STA Info field, each 20 MHz channel indication may be performed using B1 to B8, and may be mapped to B1 to B8 in order from the lower 20 MHz channel.

The partial BW Info subfield in the 4th STA Info field may correspond to 160 MHz (or 160 MHz in a relatively high frequency region) corresponding to the position of S160 in S320. For the 4th STA Info field, each 20 MHz channel indication may be performed using B1 to B8, and may be mapped to B1 to B8 in order from the lower 20 MHz channel.

If B0 is set to a value of 1, one STA Info field may be used in each of P320 and S320. That is, a first STA Info field addressed to the corresponding non-AP STA may be used for P320, and a second STA Info field addressed to the corresponding non-AP STA may be used for S320.

At this time, for the partial BW Info subfields in the first STA Info field and the second STA Info field, each 40MHz channel indication may be performed using B1 to B8, and can be sequentially mapped to B1 to B8 from the lowest 40MHz channel.

In this regard, it may be defined only if B0 is set to the value 1.

In the case where the method proposed in this embodiment is restricted to only one resolution per bandwidth, the partial BW Info subfield may be composed of only 8 bits indicating a bitmap, excluding one bit (i.e., B0) indicating the resolution. In this case, a receiver receiving an NDP announcement frame may determine/verify the bitmap resolution using the bandwidth information of the NDP announcement frame.

In the existing wireless LAN system, a feedback request channel indication for a maximum bandwidth of 320 MHz is defined in the sounding procedure. In this regard, in the existing wireless LAN system, only one STA Info field is transmitted to one STA through an NDP announcement frame for the feedback request channel indication. In contrast, the proposed method in the present disclosure has a new feature that multiple STA Info fields may be addressed to one STA in consideration of a wide bandwidth (e.g., 480 MHz/640 MHz bandwidth), and in this regard, multiple NDP announcement frames may be addressed/transmitted for one bandwidth. According to the proposed method in the present disclosure, a sounding procedure for a wide bandwidth may be supported, and since multiple STA Infos are used for feedback request channel indication for one STA, efficient channel indication may be performed within a wide bandwidth. In addition, by supporting an operation considering a wide bandwidth according to the proposed method in the present disclosure, a new effect of improved throughput and efficiency can be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving a first null data PPDU (NDP) announcement frame and a second NDP announcement frame from a second STA; and
transmitting at least one feedback frame for at least one channel to the second STA,
wherein a bandwidth for the second STA includes a first channel and a second channel,
wherein the first NDP announcement frame includes a first STA Info field for the first channel, and the second NDP announcement frame includes a second STA Info field for the second channel, and
wherein the at least one channel is indicated based on the first STA Info field and the second STA Info field.

2. The method of claim 1,
wherein the at least one channel is indicated by a first partial bandwidth information (partial BW Info) subfield included in the first STA Info field and a second partial BW Info subfield included in the second STA Info field, and
wherein each of the first partial BW Info subfield and the second partial BW Info subfield consists of 8-bits indicating a feedback bitmap and 1-bit indicating a resolution of the feedback bitmap.

3. The method of claim 2,
wherein, based on the bandwidth being 480 MHz,
the first channel is a primary 320 MHz channel and the second channel is a 160 MHz channel within the secondary 320 MHz, or
the first channel is a secondary 320 MHz channel and the second channel is a 160 MHz channel within the primary 320 MHz.

4. The method of claim 3,
wherein, based on the 1-bit included in the first partial BW Info subfield and the second partial BW Info subfield indicating 40 MHz,
the 8-bits included in the first partial BW Info subfield are mapped to eight 40 MHz channels within the first channel, and
half of the 8-bits included in the second partial BW Info subfield are mapped to four 40 MHz channels within the second channel, and a remaining half are defined as reserved.

5. The method of claim 3,
wherein, based on the 1-bit included in the first partial BW Info subfield indicating 40 MHz, the 8-bits included in the first partial BW Info subfield are mapped to eight 40 MHz channels within the first channel, and
wherein, based on the 1-bit included in the second partial BW Info subfield indicating 20 MHz, the 8-bits included in the second partial BW Info subfield are mapped to eight 20 MHz channels within the second channel.

6. The method of claim 2,
Wherein, based on the bandwidth being 640 MHz,
the first channel is a primary 320 MHz channel and the second channel is a secondary 320 MHz channel.

7. The method of claim 6,
wherein the 1-bit included in the first partial BW Info subfield and the second partial BW Info subfield indicates 40 MHz,
wherein the 8-bits included in the first partial BW Info subfield are mapped to eight 40 MHz channels within the first channel, and
wherein the 8-bits included in the second partial BW Info subfield are mapped to eight 40 MHz channels within the second channel.

8. The method of claim 1,
wherein, based on the bandwidth being 480 MHz,
the first channel is a 320 MHz channel, the second channel is a 160 MHz channel,
the first NDP announcement frame further includes a third STA Info field for the first channel, and
the third STA Info field is related to an indication of the at least one channel.

9. The method of claim 8,
wherein the 320 MHz channel is a primary 320 MHz channel, and the 160 MHz channel is a 160 MHz channel within a secondary 320 MHz channel, or
wherein the 320 MHz channel is a secondary 320 MHz channel, and the 160 MHz channel is 160 MHz within a primary 320 MHz channel.

10. The method of claim 8,
wherein the at least one channel is indicated by a first partial BW Info subfield included in the first STA Info field, a second partial BW Info subfield included in the second STA Info field, and a third partial BW Info subfield included in the third STA Info field, and
wherein each of the first partial BW Info subfield, the second partial BW Ingo subfield, and the third partial BW Info subfield consists of 8-bits indicating a feedback bitmap, and a resolution of the feedback bitmap is fixed to a specific channel width.

11. The method of claim 10,
wherein the first partial BW Info subfield indicates whether to perform 20MHz unit channel feedback in a first 160MHz channel within the first channel,
wherein the second partial BW Info subfield indicates whether to perform 20MHz unit channel feedback in the second channel, and
wherein the third partial BW Info subfield indicates whether to perform 20MHz unit channel feedback in a second 160MHz channel within the first channel.

12. The method of claim 1,
wherein, based on the bandwidth being 640 MHz,
the first channel is a first 320 MHz channel within the bandwidth and the second channel is a second 320 MHz channel within the bandwidth,
the first NDP announcement frame further includes a third STA Info field for the first channel, and the second NDP announcement frame further includes a fourth STA Info field for the second channel, and
the third STA Info field and the fourth STA Info field are related to an indication of the at least one channel.

13. The method of claim 12,
wherein the at least one channel is indicated by a first partial BW Info subfield included in the first STA Info field, a second partial BW Info subfield included in the second STA Info field, a third partial BW Info subfield included in the third STA Info field, and a fourth partial BW Info subfield included in the fourth STA Info field, and
wherein each of the first partial BW Info subfield, the second partial BW Info subfield, the third partial BW Info subfield, and the fourth partial BW Info subfield consists of 8-bits indicating a feedback bitmap, and a resolution of the feedback bitmap is fixed to a specific channel width.

14. The method of claim 13,
wherein the first partial BW Info subfield indicates whether to perform 20MHz unit channel feedback in a first 160MHz channel within the first channel,
wherein the second partial BW Info subfield indicates whether to perform 20MHz unit channel feedback in a first 160MHz channel within the second channel,
wherein the third partial BW Info subfield indicates whether to perform 20MHz unit channel feedback in a second 160MHz channel within the first channel, and
wherein the fourth partial BW Info subfield indicates whether to perform 20MHz unit channel feedback in a second 160MHz channel within the second channel.

15. An apparatus for a first station (STA) in a wireless local area network (WLAN) system, the apparatus comprising:
at least one transceiver; and
at least one processor connected to the at least one transceiver,
wherein the at least one processor is configured to:
receive a first null data PPDU (NDP) announcement frame and a second NDP announcement frame from a second STA; and
transmit at least one feedback frame for at least one channel to the second STA,
wherein a bandwidth for the second STA includes a first channel and a second channel,
wherein the first NDP announcement frame includes a first STA Info field for the first channel, and the second NDP announcement frame includes a second STA Info field for the second channel, and
wherein the at least one channel is indicated based on the first STA Info field and the second STA Info field.

16. A method performed by a second station (STA) in a wireless LAN system, the method comprising:
transmitting a first null data PPDU (NDP) announcement frame and a second NDP announcement frame to a first STA; and
receiving at least one feedback frame for at least one channel from the first STA,
wherein a bandwidth for the second STA includes a first channel and a second channel,
wherein the first NDP announcement frame includes a first STA Info field for the first channel, and the second NDP announcement frame includes a second STA Info field for the second channel, and
wherein the at least one channel is indicated based on the first STA Info field and the second STA Info field.

17. An apparatus for a second station (STA) in a wireless local area network (WLAN) system, the apparatus comprising:
at least one transceiver; and
at least one processor connected to the at least one transceiver,
wherein the at least one processor is configured to:
transmit a first null data PPDU (NDP) announcement frame and a second NDP announcement frame to a first STA; and
receive at least one feedback frame for at least one channel from the first STA,
wherein a bandwidth for the second STA includes a first channel and a second channel,
wherein the first NDP announcement frame includes a first STA Info field for the first channel, and the second NDP announcement frame includes a second STA Info field for the second channel, and
wherein the at least one channel is indicated based on the first STA Info field and the second STA Info field.

18. A processing apparatus configured to control a station (STA) in a wireless local area network (WLAN) system, the processing apparatus comprising:
at least one processor; and
at least one computer memory operably connected to the at least one processor, and based on being executed by the at least one processor, storing instructions for performing a method according to any one claim of claims 1 to 14.

19. At least one non-transitory computer-readable medium storing at least one instruction, wherein:
the at least one instruction controls a device to perform a method according to any one claim of claims 1 to 14 in a wireless local area network (WLAN) system by being executed by at least one processor.
